# EUROPEAN PATENT SPECIFICATION

(11) **EP 2 755 263 B1**
(45) Date of publication and mention of the grant of the patent: **03.01.2018**
(21) Application number: 13834348.8
(22) Date of filing: 28.11.2013
(51) Int. Cl.: B82Y 30/00, C04B 35/14, H01M 4/13, H01M 4/36, H01M 4/48, H01M 4/62, H01M 10/052, H01M 4/587

(54) **ANODE ACTIVE MATERIAL COMPRISING POROUS SILICON OXIDE-CARBON MATERIAL COMPLEX AND METHOD FOR PREPARING SAME**
ANODENAKTIVMATERIAL MIT EINEM PORÖSEN SILICIUMOXID-CARBONMATERIALVERBUNDSTOFF UND HERSTELLUNGSVERFAHREN DAFÜR
MATÉRIAU ACTIF D'ANODE COMPRENANT UN MATÉRIAU COMPLEXE OXYDE DE SILICIUM POREUX-CARBONE ET PROCÉDÉ DE PRÉPARATION ASSOCIÉ

(30) Priority: 30.11.2012 KR 20120138533; 27.11.2013 KR 20130145166
(43) Date of publication of application: 16.07.2014
(73) Proprietor: LG Chem, Ltd., Seoul 150-721 (KR)
(72) Inventor: YOO, Jung Woo, Daejon 305-738 (KR); KIM, Je Young, Daejon 305-738 (KR); LEE, Yong Ju, Daejon 305-738 (KR); CHOI, Seung Youn, Daejon 305-738 (KR); KANG, Yoon Ah, Daejon 305-738 (KR); LEE, Mi Rim, Daejon 305-738 (KR); JUNG, Hye Ran, Daejon 305-738 (KR)
(74) Representative: Goddar, Heinz J.
(86) International application number: PCT/KR2013/010922
(87) International publication number: WO 2014/084636

(56) References cited:
- EP-A1- 2 509 139
- JP-A- 2004 220 910
- JP-A- 2005 263 616
- JP-A- 2005 272 261
- JP-A- 2008 166 013
- KR-A- 20040 082 876
- KR-A- 20080 091 883
- KR-A- 20080 111 809
- KR-A- 20100 073 506
- KR-A- 20120 066 349
- KR-A- 20120 069 704
- US-A1- 2007 111 102
- US-A1- 2009 176 151
- US-A1- 2012 149 551

## Description

### TECHNICAL FIELD

The present invention relates to an anode active material including a porous silicon oxide-carbon material composite and a method of preparing the same.

### BACKGROUND ART

In line with recent miniaturization and lightweight trends in electronic devices, the miniaturization and weight reduction have also been required for batteries acting as a power source. Lithium-based secondary batteries have been commercialized as a battery that may be miniaturized, light weighted, and charged to high capacity, and the lithium-based secondary batteries have been used in portable electronic devices, such as small video cameras, mobile phones, and notebooks, and communication devices.

Lithium secondary batteries, as an energy storage device having high energy and power, may be advantageous in that capacities or operating voltages thereof are higher than those of other types of batteries. However, since the safety of the batteries may be problematic due to the high energy, there may be a risk of explosion or fire. In particular, since high energy and output characteristics are required for hybrid vehicles that have recently been in the spotlight, it may be considered that the safety is more important.

In general, a lithium secondary battery is composed of a cathode, an anode, and an electrolyte, in which charge and discharge may be possible because lithium ions, which are discharged from a cathode active material by first charging, may act to transfer energy while moving between both electrodes, for example, the lithium ions are intercalated into an anode active material, i.e., carbon particles, and deintercalated during discharging.

Meanwhile, since there is a continuous need for high-capacity batteries due to the development of portable electronic devices, research into high-capacity anode materials, such as tin (Sn) and silicon (Si), which have significantly higher capacity per unit mass than that of carbon that is used as a typical anode material, have been actively conducted. In the case that Si or a Si alloy is used as an anode active material, volume expansion may increase and cycle characteristics may degrade. In order to address the above limitations, the Si or the Si alloy may be mixed with graphite to be used as the anode active material. However, since the graphite may be non-uniformly distributed during the mixing, the cycle characteristics and lifetime may degrade.

JP 2008-166013 A discloses an anode active material consisting of porous silicon oxide SiO particles coated on their entire surface with line-type carbon material (carbon nanofibers). It also discloses that the silicon oxide exhibits pores having diameters in a range of 5-30 nm, wherein the carbon nanofibers exhibit lengths of about 10 µm and diameters in a range of 20-30 nm to 150-200 nm.

JP 2005-263616 A discloses a negative active material consisting of porous silica particles coated on their entire surface with line-type carbon material (carbon nanotubes). It also discloses that the silicon oxide exhibits pores having diameters in a range of 2-50 nm, wherein the carbon nanotubes may exhibit diameters in a range of 1-3 nm having a ratio of length/diameter being large.

### DISCLOSURE OF THE INVENTION

### TECHNICAL PROBLEM

The present invention provides an anode active material including a porous silicon oxide-carbon material composite and having improved lifetime characteristics, and a method of preparing the same.

### TECHNICAL SOLUTION

According to the present invention, there is provided an anode active material comprising a porous silicon oxide-carbon material composite, the porous silicon oxide-carbon material composite comprising: a porous silicon oxide including pores; and a line-type carbon material coated on the surface and in the pores of the porous silicon oxide, wherein the line-type carbon material is carbon nanofibers, carbon nanotubes, or a mixture thereof, an average diameter of the pores of the porous silicon oxide is in a range of 10 nm to 1,000 nm when the average diameter is measured on the surface of the porous silicon oxide, an average diameter of the line-type carbon material is in a range of 5 nm to 200 nm, and an average length thereof is in a range of 100 nm to 5 µm.

According to another aspect of the present invention, there is provided a method of preparing the inventive anode active material including bonding a metal catalyst to the surface and the inside of the pores of a porous silicon oxide; and forming a line-type carbon material on the metal catalyst.

According to another aspect of the present invention, there is also provided an anode comprising the anode active material of the present invention and a lithium secondary battery comprising the inventive anode.

Further embodiments of the present invention are disclosed in the sub-claims.

### ADVANTAGEOUS EFFECTS

According to an embodiment of the present invention, since a line-type carbon material is formed on the surface and in the pores of porous silicon oxide, the line-type carbon material is more uniformly distributed than a case of simply mixing the porous silicon oxide and the line-type carbon material. Thus, conductivity may be further improved, and since the silicon oxide includes the plurality of pores, resistance to the mechanical stress due to a volume change may be improved. Also, since the line-type carbon material is bonded to the inside of the pores, the conductivity may not be decreased even in the case in which internal cracks occur in the porous silicon oxide and lifetime characteristics may be improved.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.

FIG. 1(a) is a scanning electron microscope (SEM) image illustrating a porous silicon oxide, and FIG. 1(b) is an SEM image illustrating a porous silicon oxide-carbon nanotube composite according to an embodiment of the present invention; and
FIG. 2 is an SEM image of an anode active material used in Comparative Example 3, in which poreless silicon oxide and carbon nanotubes are simply mixed.

### MODE FOR CARRYING OUT THE INTENTION

Hereinafter, the present invention will be described in more detail to allow for a clearer understanding of the present invention.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

An anode active material according to the present invention may comprise a porous silicon oxide-carbon material composite, the porous silicon oxide-carbon material composite comprising: a porous silicon oxide including pores; and a line-type carbon material coated on the surface and in the pores of the porous silicon oxide, wherein the line-type carbon material is carbon nanofibers, carbon nanotubes, or a mixture thereof, an average diameter of the pores of the porous silicon oxide is in a range of 10 nm to 1,000 nm when the average diameter is measured on the surface of the porous silicon oxide, an average diameter of the line-type carbon material is in a range of 5 nm to 200 nm, and an average length thereof is in a range of 100 nm to 5 µm.

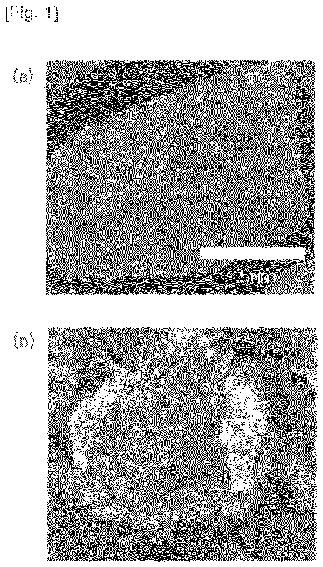

FIG. 1(a) is a scanning electron microscope (SEM) image illustrating a porous silicon oxide, and FIG. 1(b) is an SEM image illustrating a porous silicon oxide-carbon nanotube composite according to an embodiment of the present invention. Referring to FIG. 1(b), the silicon oxide-carbon nanotube composite according to the embodiment of the present invention will be described.

In the anode active material according to the embodiment of the present invention, since the line-type carbon material is formed on the surface and in the pores of porous silicon oxide, the line-type carbon material is more uniformly distributed than a case of simply mixing the porous silicon oxide and the line-type carbon material. Thus, conductivity may be further improved, and since the silicon oxide includes the plurality of pores, resistance to the mechanical stress due to a volume change may be improved.

In particular, in the anode active material according to the embodiment of the present invention, the line-type carbon material is formed both on the surface and in the pores of the porous silicon oxide. Also, in this case, since the line-type carbon material may be bonded up to the inside of the pores even in the case in which internal cracks occur in the porous silicon oxide, an amount of a conductive agent used may be decreased to 50% or more and lifetime characteristics may be further improved.

According to an embodiment of the present invention, the line-type carbon material may be included in a direction perpendicular to a tangent line to the surface and the inside of the pores of the porous silicon oxide.

The porous silicon oxide may include SiOₓ (0<x<2), and a Brunauer-Emmett-Teller (BET) specific surface area of the porous silicon oxide may be in a range of 10 m²/g to 100 m²/g. In the case that the BET specific surface area of the porous silicon oxide is less than 10 m²/g, the volume expansion of SiOₓ during charge and discharge may not be prevented. In the case in which the BET specific surface area is greater than 100 m²/g, since mechanical strength may be reduced due to a large amount of pores that are included in SiOₓ, SiOₓ may be fractured during a preparation process of a battery and cracks may occur during the charge and discharge.

The BET specific surface area of the porous silicon oxide may be measured by a BET method. For example, the specific surface area may be measured by a 6-point BET method according to a nitrogen gas adsorption-flow method using a porosimetry analyzer (Belsorp-II mini by Bell Japan Inc.).

In general, silicon particles may accompany crystal changes in reactions which electrochemically absorb, store, and release lithium atoms. Composition and crystal structure of the silicon particles change to silicon (Si) (crystal structure: Fd3m), LiSi (crystal structure: I41/a), Li₂Si (crystal structure: C2/m), Li₇Si₂ (Pbam), and Li₂₂Si₅ (F23) as the reactions which electrochemically absorb, store, and release lithium atoms proceed. A volume of the silicon particle expands to about 4 times that before the lithium atoms are intercalated, according to the changes in the crystal structure. Since the silicon particles may not withstand the repetitive volume changes during charge and discharge cycles, internal cracks and particle fracture may occur and electrical connections between the adjacent particles may also be reduced. Accordingly, this may be the biggest cause of a decrease in cycle lifetime.

However, since a porous structure in the porous silicon oxide-carbon material composite according to the embodiment of the present invention may absorb the volume expansion and the carbon material formed on the surface and the inside of the particles may maintain continuous electrical connection, the porous silicon oxide-carbon material composite may secure more improved lifetime characteristics.

In the porous silicon oxide-carbon material composite according to the embodiment of the present invention, an average diameter of the pores of the porous silicon oxide is in a range of 10 nm to 1,000 nm when it is measured on the surface thereof. In the case that the average diameter of the pores is less than 10 nm, the pores may be clogged due to the volume expansion of the porous silicon oxide-carbon material composite during charge and discharge. In the case in which the average diameter of the pores is greater than 1,000 nm, cracks may occur around the pores due to the pores that are larger than the diameter of the composite. The average diameter of the pores on the surface, for example, may be measured from SEM images.

Also, in the porous silicon oxide-carbon material composite according to the embodiment of the present invention, the line-type carbon material is carbon nanofibers, carbon nanotubes, or a mixture thereof. In the line-type carbon material, the expression "line-type" may be used as a concept including a shape that has a diameter in a nanometer scale and has a high aspect ratio. Also, the expression "line-type" may include a linear shape or a shape that may be curved or bent over the entire or partial length thereof.

In the porous silicon oxide-carbon material composite according to the embodiment of the present invention, an average diameter of the line-type carbon material may be in a range of 5 nm to 200 nm, and an average length thereof may be in a range of 100 nm to 5 µm. Preferably, the average diameter thereof may be in a range of 5 nm to 100 nm, and the average length thereof may be in a range of 500 nm to 2 µm.

Since the line-type carbon material is a highly crystalline carbon-based material and may provide a path through which lithium ions in an electrode may react due to excellent electrical conductivity and lithium ion conductivity, the line-type carbon material may uniformly maintain the distribution of current and voltage in the electrode during charge and discharge cycles. Thus, the line-type carbon material may significantly improve cycle characteristics. In particular, since the carbon nanotube has excellent strength and high resistance to fracture, the deformation of a current collector due to the repetition of charging and discharging or external force may be prevented and the oxidation of the surface of the current collector in unusual environments, such as high temperature and overcharging, of a battery may be prevented. Thus, the carbon nanotube may significantly improve the safety of the battery.

The line-type carbon material may be included in an amount ranging from 1 wt% to 10 wt% based on 100 wt% of the porous silicon oxide-carbon material composite. In the case that the amount of the line-type carbon material is less than 1 wt%, the electrical conductivity of the secondary battery may decrease and thus, the cycle characteristics and lifetime characteristics may degrade. In the case in which the amount of the line-type carbon material is greater than 10 wt%, an initial efficiency may be reduced.

Also, the anode active material according to the embodiment of the present invention may further include a graphite-based material in addition to the porous silicon oxide-carbon material composite. The graphite-based material may include one or more selected from the group consisting of natural graphite, artificial graphite, and mesocarbon microbeads (MCMB).

Furthermore, the present invention may provide a method of preparing the inventive anode active material including bonding a metal catalyst to the surface and the inside of the pores of a porous silicon oxide, and forming a line-type carbon material on the metal catalyst.

Specifically, the method of preparing an anode active material according to an embodiment of the present invention may first include bonding a metal catalyst to the surface and the inside of the pores of a porous silicon oxide.

The bonding of the metal catalyst to the surface and the inside of the pores of a porous silicon oxide may be performed by a sputtering method, a vacuum deposition method, a chemical vapor deposition (CVD) method, a plating method, or a method of dipping the silicon oxide in a solution of a metal catalyst compound. However, as the simplest and practical method, the bonding may be performed by the method of dipping the silicon oxide in the solution of the metal catalyst compound. The metal catalyst may be supported on the surface and in the pores of the porous silicon oxide by simply dipping the porous silicon oxide in the solution of the metal catalyst compound and then separating, drying, and sintering the porous silicon oxide. However, as a method of more securely supporting the metal catalyst, a method of efficiently fixing the metal catalyst on the surface and in the pores of the porous silicon oxide by substituting silicon of the silicon oxide with the metal catalyst may be used.

Also, in order to form a line-type carbon material on the porous silicon oxide using the metal catalyst, it may be necessary for the metal catalyst to be supported as fine particles. However, a method of dipping the porous silicon oxide in a colloidal sol, which is prepared by the hydrolysis of the metal catalyst compound, may be effective.

A compound, such as metal, metal oxide, metal hydroxide, and metal carbide, including one or more selected from the group consisting of chromium (Cr), manganese (Mn), iron (Fe), cobalt (Co), nickel (Ni), copper (Cu), zinc (Zn), molybdenum (Mo), indium (In), tin (Sn), aluminum (Al), and platinum (Pt) may be used as the catalyst that is bonded to the porous silicon oxide. Among the above materials, since oxides and hydroxides of Fe, Ni, and Co are excellent catalysts that may be easily supported, the line-type carbon material may be efficiently formed on the surface, in the pores, or on the surface and in the pores of the silicon oxide.

Also, the method of preparing an anode active material according to the embodiment of the present invention may include forming a line-type carbon material on the surface and in the pores of the porous silicon oxide to which the metal catalyst is bonded.

The forming of the line-type carbon material, for example, may be performed by a CVD method. Specifically, the line-type carbon material may be formed on the surface and in the pores of the porous silicon oxide by putting the porous silicon oxide having the metal catalyst bonded thereto in a CVD chamber, supplying a mixed gas including hydrocarbon gas, such as ethane, ethylene, and acetylene, and inert gas, such as nitrogen, helium, and argon, and performing a heat treatment.

Also, according to the method of preparing an anode active material according to the embodiment of the present invention, the silicon oxide-carbon material composite is formed, and the anode active material may then be prepared by further mixing a graphite-based material therewith. The graphite-based material may be included in an amount ranging from 1 part by weight to 90 parts by weight based on a total weight of the anode active material.

Furthermore, according to an embodiment of the present invention, the present invention may provide an anode including the anode active material.

In addition, the present invention may provide a secondary battery including a cathode including a cathode active material; a separator; an anode including the anode active material; and an electrolyte.

Since the secondary battery according to an embodiment of the present invention may include an anode active material including the porous silicon oxide-carbon material composite, the lifetime characteristics and initial efficiency of the secondary battery may be improved.

For example, the anode may be prepared by coating an anode current collector with a mixture of an anode active material, a conductive agent, and a binder, and then drying the coated anode current collector. If necessary, a filler may be further added. The cathode may also be prepared by coating a cathode current collector with a cathode active material and drying the coated cathode current collector.

According to an embodiment of the present invention, since the porous silicon oxide-carbon material composite is used as the anode active material, an amount of the conductive agent used may be decreased to about 50% or more in comparison to a typical case and simultaneously, the lifetime characteristics may be improved.

The separator is disposed between the anode and the cathode, and a thin insulating film having high ion permeability and mechanical strength may be used as the separator. Since the current collectors, electrode active materials, conductive agent, binder, filler, separator, electrolyte, and lithium salt are known in the art, the detailed descriptions thereof are omitted in the present specification.

The separator is disposed between the cathode and the anode to form a battery structure, the battery structure is wound or folded to put in a cylindrical battery case or prismatic battery case, and then a secondary battery is completed when the electrolyte is injected thereinto. Also, the battery structure is stacked in a bi-cell structure, impregnated with the electrolyte, and a secondary battery is then completed when the product thus obtained is put in a pouch and sealed.

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present inventive concept to those skilled in the art.

### Example 1: Preparation 1 of Porous Silicon Oxide-Carbon Material Composite

Porous SiO was dipped in an aqueous solution including iron nitrate. Subsequently, an iron catalyst was bonded to a surface and an inside of pores of the porous silicon oxide by drying the mixture thus obtained.

The porous silicon oxide having the metal catalyst bonded thereto was put in a CVD chamber, a mixed gas including hydrocarbon gas, such as ethane, and inert gas, such as nitrogen, helium, and argon, was then supplied, and heated at 800°C to form carbon nanotubes (CNTs) on the surface and the inside of the pores of the silicon oxide. Thus, a porous silicon oxide-carbon material composite was prepared.

In this case, an amount of the carbon nanotubes was 5 wt% based on 100 wt% of the porous silicon oxide-carbon material composite. Also, an average diameter of the carbon nanotubes was 50 nm and an average length thereof was 2 µm. An average diameter of pores included in the porous silicon oxide-carbon material composite was about 200 nm when measured from the surface of the composite using an SEM.

### Example 2: Preparation 2 of Porous Silicon Oxide-Carbon Material Composite

A porous silicon oxide-carbon material composite was prepared in the same manner as in Example 1 except that an amount of carbon nanotubes formed was 1 wt% based on 100 wt% of the porous silicon oxide-carbon material composite. An average diameter of pores included in the porous silicon oxide-carbon material composite was about 200 nm when measured from the surface of the composite using an SEM.

### Example 3: Preparation 3 of Porous Silicon Oxide-Carbon Material Composite

A porous silicon oxide-carbon material composite was prepared in the same manner as in Example 1 except that an amount of carbon nanotubes formed was 10 wt% based on 100 wt% of the porous silicon oxide-carbon material composite. An average diameter of pores included in the porous silicon oxide-carbon material composite was about 200 nm when measured from the surface of the composite using an SEM.

### Example 4: Preparation 1 of Secondary Battery

The porous silicon oxide-carbon material composite prepared in Example 1 as an anode active material, acetylene black as a conductive agent, and polyvinylidene fluoride as a binder were mixed at a weight ratio of 70:5:25, and the mixture was mixed with a N-methyl-2-pyrrolidone solvent to prepare a slurry. One surface of a copper current collector was coated with the prepared slurry to a thickness of 65 µm, dried and rolled. Then, an anode was prepared by punching into a predetermined size.

LiPF₆ was added to a non-aqueous electrolyte solvent prepared by mixing ethylene carbonate and diethyl carbonate at a volume ratio of 30:70 to prepare a 1 M LiPF₆ non-aqueous electrolyte solution.

A lithium foil was used as a counter electrode, a polyolefin separator was disposed between both electrodes, and a coin-type secondary battery was then prepared by injecting the electrolyte solution.

### Example 5: Preparation 2 of Secondary Battery

A secondary battery was prepared in the same manner as in Example 4 except that the porous silicon oxide-carbon material composite prepared in Example 1 as an anode active material, acetylene black as a conductive agent, and polyvinylidene fluoride as a binder were mixed at a weight ratio of 70:10:20.

### Example 6: Preparation 3 of Secondary Battery

A secondary battery was prepared in the same manner as in Example 4 except that the porous silicon oxide-carbon material composite prepared in Example 1 as an anode active material and polyvinylidene fluoride as a binder were mixed at a weight ratio of 80:20.

### Example 7: Preparation 4 of Secondary Battery

A secondary battery was prepared in the same manner as in Example 4 except that the porous silicon oxide-carbon material composite prepared in Example 2 as an anode active material and polyvinylidene fluoride as a binder were mixed at a weight ratio of 80:20.

### Example 8: Preparation 5 of Secondary Battery

A secondary battery was prepared in the same manner as in Example 4 except that the porous silicon oxide-carbon material composite prepared in Example 3 as an anode active material and polyvinylidene fluoride as a binder were mixed at a weight ratio of 80:20.

### Example 9: Preparation 6 of Secondary Battery

A secondary battery was prepared in the same manner as in Example 4 except that the porous silicon oxide-carbon material composite prepared in Example 1 and graphite as an anode active material, acetylene black as a conductive agent, and polyvinylidene fluoride as a binder were mixed at a weight ratio of 95(composite:10, graphite:85):2:3.

### Comparative Example 1:

A secondary battery was prepared in the same manner as in Example 4 except that porous SiO as an anode active material, carbon nanotubes as a conductive agent, and polyvinylidene fluoride as a binder were mixed at a weight ratio of 70:10:20.

### Comparative Example 2:

A secondary battery was prepared in the same manner as in Example 4 except that porous SiO as an anode active material and polyvinylidene fluoride as a binder were mixed at a weight ratio of 80:20.

### Comparative Example 3:

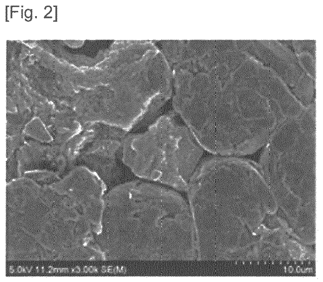

A secondary battery was prepared in the same manner as in Example 4 except that poreless SiO as an anode active material, carbon nanotubes as a conductive agent, and polyvinylidene fluoride as a binder were mixed at a weight ratio of 70:5:25 (see FIG. 2: scanning electron microscope image of a sample in which SiOₓ and carbon nanotubes were simply mixed).

### Comparative Example 4:

A secondary battery was prepared in the same manner as in Example 4 except that a silicon oxide-carbon material composite, in which carbon nanotubes were grown on poreless SiO, was used as an anode active material.

### Experimental Example 1: Scanning electron microscope (SEM) Analysis

SEM analyses were respectively performed on a surface of the anode active material prepared in Example 1 and a surface of the anode active material used in Comparative Example 3. The results thereof are respectively presented in FIGS. 1 and 2.

FIG. 1(a) is an SEM image illustrating a porous silicon oxide and FIG. 1(b) is an SEM image illustrating a porous silicon oxide-carbon nanotube composite that is prepared according to Example 1.

Referring to FIG. 1, a porous silicon oxide-carbon nanotube composite (see FIG. 1(b)), in which carbon nanotubes were grown on a surface and in pores of a porous silicon oxide (see FIG. 1(a)), may be identified, and it may be also identified that the porous silicon oxide was coated by forming carbon nanotubes even in the pores.

FIG. 2 is an SEM image of an anode active material that was used in Comparative Example 3, in which poreless silicon oxide and carbon nanotubes are simply mixed. Referring to FIG. 2, in a case where the porous silicon oxide was simply mixed with the carbon nanotubes as in Comparative Example 3, it may be identified that the anode active material was not a composite form, in which carbon nanotubes were grown on the surface of the silicon oxide as in FIG. 1(b), but was a simple mixed form.

### Experimental Example 2: Discharge Capacity, Initial Efficiency, and Lifetime Characteristics Analysis

The following experiments were performed in order to investigate discharge capacities, initial efficiencies, and lifetime characteristics of the secondary batteries prepared in Examples 4 to 9 and Comparative Examples 1 to 4.

The lithium secondary batteries (battery capacity: 3.4 mAh) prepared in Examples 4 to 9 and Comparative Examples 1 to 4 were charged at a constant current (CC) of 0.1 C to a voltage of 10 mV, and thereafter, charge in the first cycle was performed by charging the lithium secondary batteries at a constant voltage (CV) to a current of 0.17 mAh. After the batteries were left standing for 10 minutes, the batteries were discharged at a constant current of 0.1 C to a voltage of 1.5 V.

First cycle charge capacity and first cycle discharge capacity were measured to obtain a ratio of the first cycle discharge capacity to the first cycle charge capacity for each battery.

Lifetime characteristics of each battery were measured by performing charge and discharge at 0.5 C after a third cycle, and the lifetime characteristics were represented as a ratio of discharge capacity in a 49th cycle to the first cycle discharge capacity.

**[Table 1]**

| Examples | Carbon nanotubes (wt%) | Discharge capacity (mAh/g, discharge at 1.5 V) | Initial efficiency (%) |
|---|---|---|---|
| Example 4 | 5 | 1568 | 71 |
| Example 7 | 1 | 1568 | 72 |
| Example 8 | 10 | 1530 | 65 |

| | | | |
|---|---|---|---|
| - Initial efficiency: (first cycle discharge capacity/first cycle charge capacity) x 100 | | | |

**[Table 2]**

| Examples | Content ratio of active material:conductive agent:binder | Lifetime characteristics (%) |
|---|---|---|
| Example 4 | 70:5:25 | 90 |
| Example 5 | 70:10:20 | 95 |
| Example 6 | 80:0:20 | 85 |
| Example 7 | 80:0:20 | 80 |
| Example 8 | 80:0:20 | 90 |
| Example 9 | 95(10+85):2:3 | 85 |
| Comparative Example 1 | 70:10:20 | 85 |
| Comparative Example 2 | 80:0:20 | 50 |
| Comparative Example 3 | 80:0:20 | 40 |
| Comparative Example 4 | 70:5:25 | 60 |

| | | |
|---|---|---|
| - Lifetime characteristics: (discharge capacity in a 49th cycle/first cycle discharge capacity) x 100 | | |

As illustrated in Table 1, it may be confirmed that the discharge capacity and initial efficiency may be changed according to a weight of the carbon nanotubes with respect to a total weight of the porous silicon oxide-carbon material composite. Specifically, in the case that the weight of the carbon nanotubes included was 5 wt% or less (Examples 4 and 7), the discharge capacities and the initial efficiencies were similar. However, in the case in which the weight of the carbon nanotubes was 10 wt% (Example 8), it may be understood that the discharge capacity and the initial efficiency were slightly decreased in comparison to Examples 4 and 7. Therefore, it may be estimated that the performance of the secondary battery may further degrade when the weight of the carbon nanotubes was greater than 10 wt%.

Table 2 illustrates the results of lifetime characteristics according to a content ratio of active material:conductive agent:binder.

As illustrated in Table 2, the lifetime characteristics of the secondary batteries prepared in Examples 4 to 9 were improved in comparison to Comparative Examples 1 to 4.

In particular, with respect to the porous silicon oxide-carbon material composites in Examples 6 to 8, it may be understood that the lifetime characteristics that were equal to or greater than those of Comparative Example 1 using the conductive agent were obtained without using a conductive agent, and the lifetime characteristics were improved twice or more than those of Comparative Examples 2 and 3.

Also, when comparing Example 1 and Comparative Example 4 according to the presence of pores, it may be confirmed that the lifetime characteristics of Example 4 using the porous silicon oxide-carbon material composite were increased to about 30% in comparison to Comparative Example 4 using the non-porous silicon oxide-carbon material composite.

Therefore, it may be understood that since the porous silicon oxide-carbon material composite including the line-type carbon material on the surface, in the pores, or on the surface and in the pores of the porous silicon oxide was used, the conductivity may not be decreased even without using a separate conductive agent and the lifetime characteristics may be improved.

### INDUSTRIAL APPLICABILITY

An anode active material according to an embodiment of the present invention may improve conductivity and resistance to the mechanical stress due to a volume change. As a result, lifetime characteristics of a secondary battery may be improved. Thus, the anode active material may be suitable for secondary batteries.

## Claims

1. An anode active material comprising a porous silicon oxide-carbon material composite, the porous silicon oxide-carbon material composite comprising:
a porous silicon oxide including pores; and
a line-type carbon material coated on the surface and in the pores of the porous silicon oxide,
wherein the line-type carbon material is carbon nanofibers, carbon nanotubes, or a mixture thereof,
an average diameter of the pores of the porous silicon oxide is in a range of 10 nm to 1,000 nm when the average diameter is measured on the surface of the porous silicon oxide,
an average diameter of the line-type carbon material is in a range of 5 nm to 200 nm, and an average length thereof is in a range of 100 nm to 5 µm.

2. The anode active material of claim 1, wherein the line-type carbon material is included in a direction perpendicular to a tangent line to the surface and the inside of the pores of the porous silicon oxide.

3. The anode active material of claim 1, wherein the porous silicon oxide comprises SiOₓ, where 0<x<2.

4. The anode active material of claim 1, wherein a Brunauer-Emmett-Teller (BET) specific surface area of the porous silicon oxide is in a range of 10 m²/g to 100 m²/g.

5. The anode active material of claim 1, wherein the line-type carbon material is included in an amount ranging from 1 wt% to 10 wt% based on 100 wt% of the porous silicon oxide-carbon material composite.

6. The anode active material of claim 1, wherein the anode active material further comprises a graphite-based material.

7. The anode active material of claim 6, wherein the graphite-based material comprises one or more selected from the group consisting of natural graphite, artificial graphite, and mesocarbon microbeads (MCMB).

8. A method of preparing an anode active material of claim 1, the method comprising:
bonding a metal catalyst to the surface and the inside of the pores of a porous silicon oxide; and
forming a line-type carbon material on the metal catalyst.

9. The method of claim 8, wherein the porous silicon oxide comprises SiOₓ, where 0<x<2.

10. The method of claim 8, wherein the metal catalyst comprises one or more selected from the group consisting of chromium (Cr), manganese (Mn), iron (Fe), cobalt (Co), nickel (Ni), copper (Cu), zinc (Zn), molybdenum (Mo), indium (In), tin (Sn), aluminum (Al). and platinum (Pt).

11. The method of claim 8, wherein the bonding of the metal catalyst to the surface and the inside of the pores of the porous silicon oxide is performed by a sputtering method, a vacuum deposition method, a chemical vapor deposition (CVD) method, a plating method, or a method of dipping the silicon oxide in a solution of a metal catalyst compound.

12. The method of claim 8, wherein the forming of the line-type carbon material is performed by a CVD method.

13. An anode comprising the anode active material of claim 1.

14. A lithium secondary battery comprising the anode of claim 13.

## Patentansprüche

1. Anodenaktivmaterial umfassend einen porösen Siliciumoxid-Kohlenstoffmaterial-Verbund, wobei der poröse Siliciumoxid-Kohlenstoff-Materialverbund umfasst:
ein poröses Siliciumoxid einschließend Poren; und
ein linienartiges Kohlenstoffmaterial, das auf der Oberfläche und in den Poren des porösen Siliciumoxids beschichtet ist,
wobei das linienartige Kohlenstoffmaterial Kohlenstoffnanofasern, Kohlenstoffnanoröhrchen oder eine Mischung derselben ist,
wobei ein durchschnittlicher Durchmesser der Poren des porösen Siliciumoxids in einem Bereich von 10 nm bis 1000 nm ist, wenn der durchschnittliche Durchmesser auf der Oberfläche des porösen Siliciumoxids gemessen wird,
wobei ein durchschnittlicher Durchmesser des linienartigen Kohlenstoffmaterials in einem Bereich von 5 nm bis 200 nm ist, und wobei eine durchschnittliche Länge desselben in einem Bereich von 100 nm bis 5 µm ist.

2. Anodenaktivmaterial nach Anspruch 1, wobei das linienartige Kohlenstoffmaterial in einer Richtung senkrecht zu einer Tangenslinie zu der Oberfläche und der Innenseite der Poren des porösen Siliciumoxids eingeschlossen ist.

3. Anodenaktivmaterial nach Anspruch 1, wobei das poröse Siliciumoxid SiOₓ umfasst, wobei 0<x<2 ist.

4. Anodenaktivmaterial nach Anspruch 1, wobei eine spezifische Oberfläche nach Brunauer-Emmett-Teller (BET) des porösen Siliciumoxids in einem Bereich von 10 m²/g bis 100 m²/g ist.

5. Anodenaktivmaterial nach Anspruch 1, wobei das linienartige Kohlenstoffmaterial in einer Menge im Bereich von 1 Gew.% bis 10 Gew.%, basierend auf 100 Gew.% des porösen Siliciumoxid-Kohlenstoffmaterial-Verbunds eingeschlossen ist.

6. Anodenaktivmaterial nach Anspruch 1, wobei das Anodenaktivmaterial ferner ein Material auf Graphitbasis umfasst.

7. Anodenaktivmaterial nach Anspruch 6, wobei das Material auf Graphitbasis eines oder mehrere umfasst ausgewählt aus der Gruppe bestehend aus natürlichem Graphit, künstlichem Graphit und Mesokohlenstoffmikrokügelchen (MCMB).

8. Verfahren zum Herstellen eines Anodenaktivmaterials nach Anspruch 1, wobei das Verfahren umfasst:
Binden eines Metallkatalysators an die Oberfläche und die Innenseite der Poren eines porösen Siliciumoxids;
Bilden eines linienartigen Kohlenstoffmaterials auf dem Metallkatalysator.

9. Verfahren nach Anspruch 8, wobei das poröse Siliciumoxid SiOₓ umfasst, wobei 0<x<2 ist.

10. Verfahren nach Anspruch 8, wobei der Metallkatalysator eines oder mehrere umfasst ausgewählt aus der Gruppe bestehend aus Chrom (Cr), Mangan (Mn), Eisen (Fe), Kobalt (Co), Nickel (Ni), Kupfer (Cu), Zink (Zn), Molybdän (Mo), Indium (In), Zinn (Sn), Aluminium (Al) und Platin (Pt).

11. Verfahren nach Anspruch 8, wobei das Binden des Metallkatalysators an die Oberfläche und die Innenseite der Poren des porösen Siliciumoxids durchgeführt wird durch ein Sputterverfahren, ein Vakuumabschneidungsverfahren, ein chemisches Verdampfungsverfahren (CVD), ein Plattierungsverfahren oder ein Verfahren zum Eintauchen des Siliciumoxids in einer Lösung einer Metallkatalysatorverbindung.

12. Verfahren nach Anspruch 8, wobei das Bilden des linienartigen Kohlenstoffmaterials durch ein CVD-Verfahren durchgeführt wird.

13. Anode umfassend das Anodenaktivmaterial nach Anspruch 1.

14. Lithiumsekundärbatterie umfassend die Anode in Anspruch 13.

## Revendications

1. Matériau actif d'anode comprenant un matériau complexe oxyde de silicium poreux-carboné, ledit matériau complexe d'oxyde de silicium-carboné comprenant :
un oxyde de silicium poreux contenant des pores ; et
un matériau carboné à type de ligne sur la surface et dans les pores de l'oxyde de silicium poreux,
dans lequel le matériau carboné à type de ligne est composé de nanofibres de carbone, de nanotubes de carbone ou d'un mélange de ceux-ci.
un diamètre moyen des pores de l'oxyde de silicium poreux se situe dans la plage de 10 nm à 1.000 nm lorsque le diamètre moyen est mesuré sur la surface de l'oxyde de silicium poreux,
un diamètre moyen du matériau carboné à type de ligne se situe dans la plage de 5 nm à 200 nm et une longueur moyenne se situe dans la plage de 100 nm à 5 µm.

2. Matériau actif d'anode selon la revendication 1, dans lequel le matériau carboné à type de ligne est incorporé dans une direction perpendiculaire à une ligne tangente par rapport à la surface et à l'intérieur des pores de l'oxyde de silicium poreux.

3. Matériau actif d'anode selon la revendication 1, dans lequel l'oxyde de silicium poreux comprend du SiOₓ, où 0 < x < 2.

4. Matériau actif d'anode selon la revendication 1, dans lequel l'aire surfacique spécifique telle que mesurée par la méthode BET (Brunauer-Emmett-Teller) de l'oxyde de silicium poreux se situe dans la plage de 10 m²/g à 100 m²/g.

5. Matériau actif d'anode selon la revendication 1, dans lequel le matériau carboné à type de ligne est incorporé en une quantité allant de 1 % en poids à 10 % en poids par rapport à 100 % en poids du matériau complexe oxyde de silicium poreux-carboné.

6. Matériau actif d'anode selon la revendication 1, dans lequel le matériau actif d'anode comprend en outre un matériau à base de graphite.

7. Matériau actif d'anode selon la revendication 6, dans lequel le matériau à base de graphite comprend un ou plusieurs composés sélectionnés dans le groupe constitué de graphite naturel, de graphite artificiel et de microbilles de mésocarbone (MCMB).

8. Procédé de préparation d'un matériau actif d'anode selon la revendication 1, le procédé comprenant les étapes consistant à :
coller un catalyseur métallique à la surface et à l'intérieur des pores d'un oxyde de silicium poreux ; et
former un matériau carboné à type de ligne sur le catalyseur métallique.

9. Procédé selon la revendication 8, dans lequel l'oxyde de silicium poreux comprend du SiOₓ, où 0 < x < 2.

10. Procédé selon la revendication 8, dans lequel le catalyseur métallique comprend un ou plusieurs composés sélectionnés dans le groupe constitué de chrome (Cr), de manganèse (Mn), de fer (Fe), de cobalt (Co), de nickel (Ni), de cuivre (Cu), de zinc (Zn), de molybdène (Mo), d'indium (In), d'étain (Sn), d'aluminium (Al) et de platine (Pt).

11. Procédé selon la revendication 8, dans lequel le collage du catalyseur métallique à la surface et à l'intérieur des pores de l'oxyde de silicium poreux est réalisé par un procédé de pulvérisation, un procédé de dépôt sous vide, un procédé de dépôt chimique en phase vapeur (CVD), un procédé de placage ou un procédé de trempage de l'oxyde de silicium dans une solution constituée d'un composé de catalyseur métallique.

12. Procédé selon la revendication 8, dans lequel la formation du matériau carboné à type de ligne est réalisée par un procédé CVD.

13. Anode comprenant le matériau actif d'anode selon la revendication 1.

14. Batterie secondaire au lithium comprenant l'anode selon la revendication 13.
